# EUROPÄISCHE PATENTANMELDUNG

(11) **EP 1 498 449 A2**
(43) Veröffentlichungstag der Anmeldung: **19.01.2005**
(21) Anmeldenummer: 04015722.4
(22) Anmeldetag: 03.07.2004
(51) Int. Cl.: C08K 5/5313, D06N 1/00, C04B 26/02

(54) **Elastisches Belagmaterial mit verbesserten Flammschutzeigenschaften sowie ein Verfahren zu dessen Herstellung**

(30) Priorität: 14.07.2003 DE 10331888
(71) Anmelder: Clariant GmbH, 65929 Frankfurt am Main (DE)
(72) Erfinder: Bauer, Harald, Dr., 50170 Kerpen (DE); Deger, Hans-Matthias, Dr., 65719 Hofheim (DE); Krause, Werner, Dr., 50354 Hürth (DE)
(74) Vertreter: Mikulecky, Klaus, Dr.

(57) **Zusammenfassung**

Die Erfindung betrifft ein elastisches Belagmaterial, dadurch gekennzeichnet, dass es als Flammschutzmittel ein Phosphinsäuresalz der Formel (I) und/oder ein Diphosphinsäuresalz der Formel (II) und/oder deren Polymere 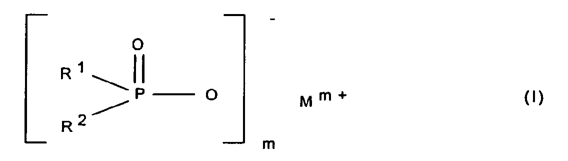 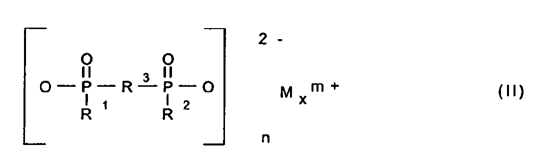 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten, enthält.

Die Erfindung betrifft Verfahren zur Herstellung von solchen elastischen Belagmaterialien.

## Beschreibung

Elastisches Belagmaterial mit verbesserten Flammschutzeigenschaften sowie ein Verfahren zu dessen Herstellung

Die vorliegende Erfindung betrifft ein elastisches Belagmaterial mit verbesserten Flammschutzeigenschaften sowie ein Verfahren zu dessen Herstellung.

Elastische Belagmaterialien werden in verschiedenen Arten von v.a.D. Fußbodenbelägen verwendet, von denen einige nachfolgend beschrieben werden.

Bodenbeläge auf Linoleum-Basis: Bodenbeläge auf Linoleum-Basis sowie Verfahren zu deren Herstellung sind seit langem bekannt. Ein Nachteil der im Stand der Technik bekannten Bodenbeläge auf Linoleum-Basis ist jedoch das nicht unkritische Brandverhalten, da Linoleum nur mit Schwierigkeiten die Baustoffklasse B1 (Brandprüfung nach DIN 4102 T14,"Radiant Flooring Panel Test") erreicht.

WO 02/081812 beschreibt einen Bodenbelag auf Linoleum-Basis, umfassend mindestens eine Nutzschicht aus Linoleum, welche mindestens ein Flammschutzmittel, ausgewählt aus der Gruppe der expandierbaren Graphite, enthält.

Bodenbeläge auf Kork-Basis: Das nicht unkritische Brandverhalten ist auch ein Nachteil der im Stand der Technik bekannten Bodenbeläge auf Kork-Basis.
WO 02/081812 beschreibt auch einen Bodenbelag auf Kork-Basis, umfassend mindestens ein Flammschutzmittel, ausgewählt aus der Gruppe der expandierbaren Graphite.

Wegen der geringen Eigenhelligkeit des Graphites kann es als Flammschutzmittel entweder nicht in der Nutzschicht eingesetzt werden oder der Anwender muss eine dunkle Einfärbung des Materials in Kauf nehmen. Diese nachteilige dunkle Einfärbung kann dabei je nach Herstellverfahren auch als Jaspé-artige Struktur auftreten. Helle Färbungen sind ohne den übermäßigen Einsatz von Weiß-Pigmenten nicht möglich.

Außerdem enthalten expandierbare Graphite erhebliche Anteile an Intercalationsverbindungen, die das Aufblähen im Brandfall gewährleisten. Häufig sind dies Schwefelsäure, Essigsäure oder Salpetersäure. Die Gehalte an diesen Säuren können bis zu 8 Gew.-% betragen. Wird ein derartiger expandierbarer Graphit im Polymer eingesetzt, kann in feuchter Atmosphäre oder bei Staunässe ein erheblicher Anteil an saurem Elektrolyt ausgewaschen werden. Dies kann in der Umgebung des Bauteils zu erheblicher Korrosion führen, z.B. im Falle von Beton und Schwefelsäure zu Betonkorrosion und bei elektrischen Bauteilen zu Kupferkorrosion.

Im Brandfall kann dazu noch es zur Bildung gefährlicher Dämpfe wie Essigsäure, Schwefeldioxid, Schwefeltrioxid oder nitroser Gase kommen.

Der vorliegenden Erfindung liegt daher die Aufgabe zugrunde, einen Belag bereitzustellen, der die vorgenannten Nachteile des Standes der Technik vermeidet und der ein deutlich verbessertes Brandverhalten im Vergleich zum Stand der Technik aufweisen soll. Gleichzeitig soll das eingesetzte phosphororganische Flammschutzmittel einen hohen Weißgrad und einen geringen Anteil an löslichem Elektrolyten aufweisen.

Diese Aufgabe wird gelöst durch ein elastisches Belagmaterial, dadurch gekennzeichnet, dass als Flammschutzmittel ein Phosphinsäuresalz der Formel (I) und/oder ein Diphosphinsäuresalz der Formel (II) und/oder deren Polymere 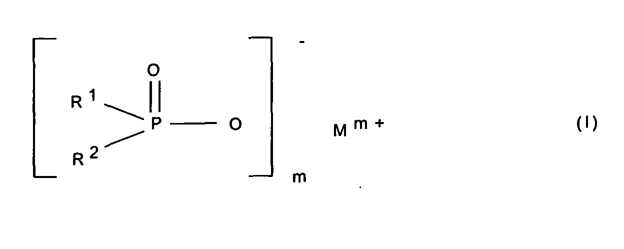 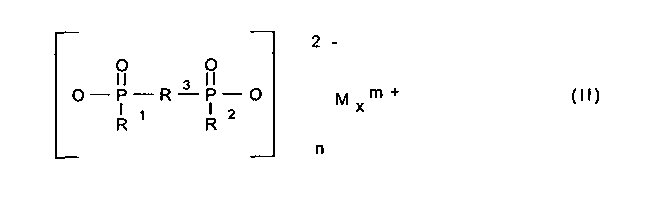 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten, enthält.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphthylen, Ethyl-naphthylen oder tert.-Butylnaphthylen.

Bevorzugt bedeutet R³ auch Phenyl-methylen, Phenyl-ethylen, Phenyl-propylen oder Phenyl-butylen.

Bevorzugt enthält das Flammschutzmittel weiterhin Melaminphosphat, Dimelaminphosphat, Melaminpyrophosphat, Melaminpolyphosphate, Melampolyphosphate, Melempolyphosphate und/oder Melonpolyphosphate.

Bevorzugt enthält das Flammschutzmittel weiterhin Melaminkondensationsprodukte wie Melam, Melem und/oder Melon.

Geeignet sind Kondensationsprodukte des Melamins oder Umsetzungsprodukte des Melamins mit Phosphorsäure bzw. Umsetzungsprodukte von Kondensationsprodukten des Melamins mit Phosphorsäure sowie Gemische der genannten Produkte. Kondensationsprodukte des Melamins sind z.B. Melem, Melam oder Melon bzw. höher kondensierte Verbindungen dieses Typs sowie Gemische derselben und können beispielsweise durch ein Verfahren hergestellt werden, wie es in der WO 96/16948 beschrieben ist.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze, wie sie z. B. in der WO 98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog WO 98/45364 hergestellt werden durch die Umsetzung von Polyphosphorsäure und Melamin bzw. analog WO 98/08898 durch die Kondensation von Melaminphosphat bzw. Melaminpyrophosphat.

Bevorzugt enthält das Flammschutzmittel weiterhin oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin.

Bevorzugt enthält das Flammschutzmittel stickstoffhaltige Phosphate der Formeln (NH₄)_{y} H_{3-y} PO₄ bzw. (NH₄ PO₃)_{z}, mit y gleich 1 bis 3 und z gleich 1 bis 10.000 Bevorzugt enthält das Flammschutzmittel weiterhin Salze und Ester der Orthokieselsäure und deren Kondensationsprodukte, Silikate, Zeolithe und Kieselsäuren, Glas-, Glas-Keramik oder Keramik-Pulver; Magnesiumhydroxid, Hydrotalcite, Magnesium-Carbonate oder Magnesium-Calcium-Carbonate; Zinkoxid, -stannat, -hydroxystannat, -phosphat, -borat oder -sulfide; Aluminiumhydroxid oder -phosphat.

Bevorzugt enthält das Flammschutzmittel Stickstoffverbindungen.

Bevorzugt handelt es sich bei den Stickstoffverbindungen um solche der Formeln (III) bis (VIII) oder Gemische davon 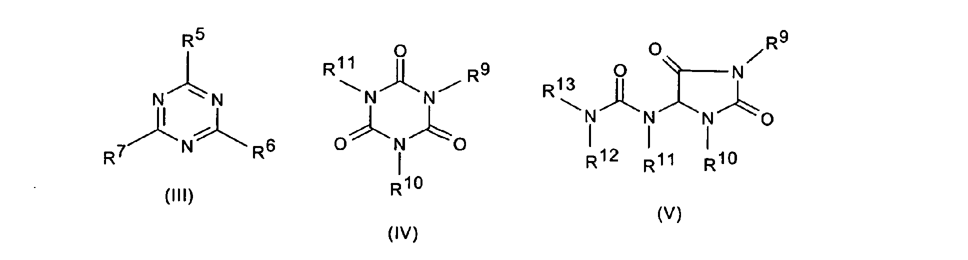 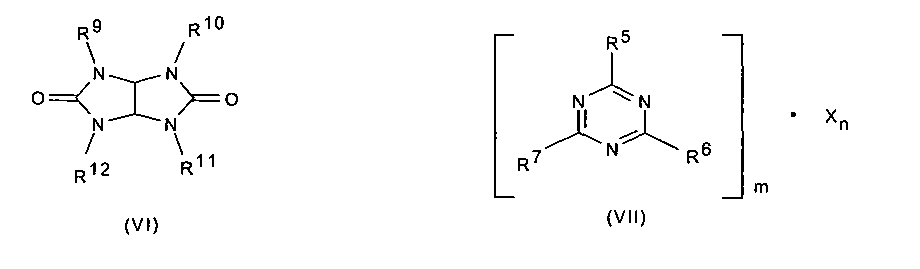 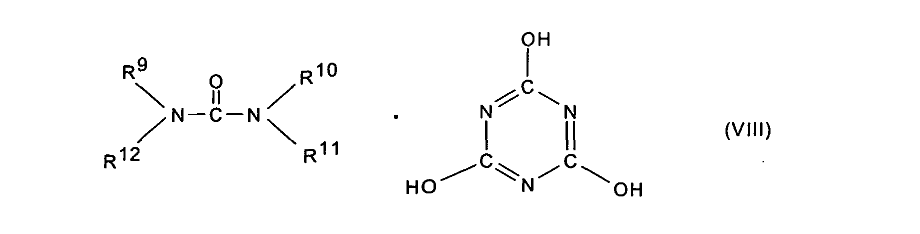 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl- Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können, bedeuten.

Bevorzugt enthält das Flammschutzmittel auch Carbodiimide.

Erfindungsgemäß sind auch synergistische Kombinationen von den genannten Phosphinaten mit den vorgenannten stickstoffhaltigen Verbindungen, die in einer ganzen Reihe von Polymeren als Flammschutzmittel effektiver wirken, als die Phosphinate allein (DE-A-196 14 424, DE-A-197 34 437 und DE-A-197 37 727). Die Flammschutzwirkung der oberflächenmodifizierten Phosphinate kann durch Kombination mit weiteren Flammschutzmitteln, vorzugsweise stickstoffhaltigen Synergisten oder Phosphor/Stickstoff Flammschutzmitteln verbessert werden.

Der Gehalt an Phosphinsäuresalz der Formel (I) und/oder ein Diphosphinsäuresalz der Formel (II) und/oder deren Polymere im Flammschutzmittel beträgt erfindungsgemäß 1 bis 99 Gew.-%, bevorzugt 20 bis 90 Gew.-% und besonders bevorzugt 30 bis 80 Gew.-%.

Der Gehalt des Flammschutzmittels im erfindungsgemäßen flammgeschützten elastischen Belagmaterial beträgt 0,01 bis 40 Gew.-%, bevorzugt 0,1 bis 20 Gew.-% und besonders bevorzugt 0,3 bis 10 Gew.-%.

Bevorzugt handelt es sich bei dem elastischen Belagmaterial um Linoleum, thermoplastische Kunststoffe, Polyvinylchlorid, Kautschuk-Gummi-Kombinationen, Kork, Polymere auf Polyurethan und/oder Styrol-Butadien-Latex-Basis.

Wenn es sich bei dem Belagmaterial um Linoleum handelt, enthält das Belagmaterial 10 bis 90 Gew.- % Bindemittel auf Linoleum-Basis, 10 bis 90 Gew.-% organische Füllstoffe, 5 bis 40 Gew.-% anorganische (mineralische) Füllstoffe und Pigmente und 0,1 bis 10 Gew.-% Flammschutzmittel.

Wenn es sich bei dem Belagmaterial um Linoleum handelt, enthält das Belagmaterial bevorzugt 30 bis 70 Gew.- % Bindemittel auf Linoleum-Basis, 30 bis 70 Gew.-% organische Füllstoffe, 5 bis 35 Gew.-% anorganische (mineralische) Füllstoffe und Pigmente und 0,1 bis 10 Gew.-% Flammschutzmittel.

Bevorzugt handelt es sich bei dem thermoplastischen Kunststoff um Polyvinylchlorid, Acrylonitril-Butadien-Styrol, Polypropylen, Polyethylen, thermoplastisches Polyurethan, Polyvinylacetat, Celluloseacetat, Polystyrol, Ethylcellulose, Polyvinylidenchlorid, Polyurethan, Nylon, Acryl, Polyacrylat und/oder Polyphenylenoxid.

Wenn es sich bei dem thermoplastischen Kunststoff des Belagmaterials um Polyvinylchlorid handelt, enthält das Belagmaterial 10 bis 90 Gew.- % Polyvinylchlorid, 10 bis 90 Gew.- % Plastifizierungsmittel, 10 bis 90 Gew.-% anorganische (mineralische) Füllstoffe und 0,1 bis 10 Gew.-% Flammschutzmittel.

Wenn es sich bei dem Belagmaterial um Kautschuk-Gummi-Kombinationen handelt, enthält das Belagmaterial es 10 bis 90 Gew.- % Kautschuk, 10 bis 90 Gew.-% anorganische Füllstoffe und 0,1 bis 10 Gew.-% Flammschutzmittel.

Wenn es sich bei dem Belagmaterial um Kork handelt, enthält das Belagmaterial 10 bis 90 Gew.- % organisches Bindemittel, 10 bis 90 Gew.-% organische Füllstoffe (Korkgranulat) und 0,1 bis 10 Gew.-% Flammschutzmittel.

Bevorzugt ist das organisches Bindemittel Melamin-Formaldehyd-Harz.

Wenn das elastische Belagmaterial für Rücken von textilen Bodenbelägen eingesetzt werden kann enthält es
10 bis 90 Gew.- % Kunststoffmasse
10 bis 90 Gew.-% anorganische (mineralische) Füllstoffe
0,1 bis 10 Gew.-% Flammschutzmittel

Die Erfindung betrifft auch ein Verfahren zur Herstellung eines elastischen Belagmaterial mit Linoleum, dadurch gekennzeichnet, dass teiloxidiertes Leinöl während 0,01 bis 100 h bei 30 bis 300°C mit Kolophonium zu Linoleumzement geschmolzen wird und dann das Linoleumzement mit organischem und/oder anorganischem Füllstoff, Pigmenten und Flammschutzmittel gemischt, anschließend mit einer Stachelwalze (Kratzer) gekörnt und mit einem Kalander bei 10 bis 150°C auf ein Trägermaterial gepresst und danach bei 30 bis 300°C über 1 bis 1000h getrocknet wird.

Die Erfindung betrifft auch Verfahren zur Herstellung eines elastischen Belagmaterials auf PVC-Basis, dadurch gekennzeichnet, dass Polyvinylchlorid, Plastifizierungsmittelanorganische (mineralische) Füllstoffe und Flammschutzmittel und ggf. weitere Zusätze gemischt, zu Bahnen gewalzt und zu einem Granulat mit Teilchengrößen von 0,1 bis 10mm zerkleinert werden, das bei 100 bis 300°C geschmolzen und in einer Walze auf eine Unterstützungsschicht aufgewalzt und zugeschnitten wird.

Die Erfindung betrifft auch ein Verfahren zur Herstellung eines elastischen Belagmaterials auf Kautschuk-Basis, dadurch gekennzeichnet, dass Kautschuk, Füllstoffe, Flammschutzmittel und ggf. weitere Zusätze bei 100 bis 300°C während 0,01 bis 100h gemischt und anschließend vulkanisiert werden.

Die Erfindung betrifft auch ein Verfahren zur Herstellung eines elastischen Belagmaterials auf Kork-Basis, dadurch gekennzeichnet, dass organisches Bindemittel und organische Füllstoffe (Korkgranulat) mit einer Korngröße von 0,1 bis 10 mm mit einem Vernetzungskatalysator vermischt und dann mit dem Flammschutzmittel bei erhöhter Temperatur von 30 bis 300°C innerhalb von 0,01 bis 100 Stunden und erhöhtem Druck (1-200 t ) verdichtet und die erhaltenen Blöcke in Platten geschnitten werden.

Die Erfindung betrifft auch ein Verfahren zur Herstellung eines elastischen Belagmaterials für Rücken von textilen Bodenbelägen, dadurch gekennzeichnet, dass Kunststoffmasse (Latex), anorganische (mineralische) Füllstoffe und das Flammschutzmittel bei Temperaturen von 20 bis 300°C gemischt werden und die entstandene Latexmischung auf einen Teppichrücken aufgegossen und gegebenenfalls eine weitere Deckschicht aufgebracht wird.
Die bevorzugte Schüttdichte des Flammschutzmittels beträgt 80 bis 800 g/l, besonders bevorzugt 200 bis 700 g/l.

Bevorzugt ist die Teilchengröße des Flammschutzmittels beträgt 0,1 bis 1000 µm, besonders bevorzugt 1 bis 100µm.

Bevorzugt ist der Weißgrad des Flammschutzmittels 80 bis 100 (Hunter L-Wert), besonders bevorzugt 85 bis 95.

Erfindungsgemäß beträgt der Phosphorgehalt des Flammschutzmittels 5 bis 40%, besonders bevorzugt 15 bis 30 Gew.-%.

Die Rieselfähigkeit des Flammschutzmittels beträgt, bestimmt in Anlehnung an DIN 53916 und ausgedrückt als der Cotangens des Schüttwinkels Phi, ist bevorzugt 1 bis 2, besonders bevorzugt 1,2 bis 1,8.

Der Gehalt des Flammschutzmittels an löslichem Elektrolyt und gerechnet als Anion (z.B. Sulfat, Acetat, Nitrat, Nitrit, Bromid, Chlorid) liegt zwischen 1 und 100.000 ppm, bevorzugt zwischen 10 und 50.000 ppm und besonders bevorzugt zwischen 20 und 1000 ppm.

Erfindungsgemäß kann das erfindungsgemäße flammgeschützte elastische Belagmaterial Anwendung als Fußbodenbelag, Decken-, Wandbelag und zu Kaschieren von Kunststoffen etc finden.

Für das erfindungsgemäße flammgeschützte elastische Belagmaterial werden bevorzugt flammgeschützte Polymerformmassen (Master-Batches, Compounds) angewendet.

Das Flammschutzmittel kann in flammgeschützte Polymerformmassen eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt zum elastischen Belagmaterial verarbeiten.

Flammgeschütztes elastisches Belagmaterial auf Linoleumbasis Bei elastischen Fußbodenbelägen besteht die Nutzschicht nicht aus Textilfasern, sondern aus elastischem Belagmaterial.

Bevorzugt ist die Verwendung des erfindungsgemäßen flammgeschützten elastischen Belagmaterials auf Linoleumbasis als Nutzschicht.

Der Anteil an Flammschutzmittel im flammgeschützten elastischen Belagmaterial auf Linoleumbasis beträgt vorzugsweise bis zu 40 Gew.-%, mehr bevorzugt von 0,1 bis 20 Gew.-%.

Besonders bevorzugt enthält das erfindungsgemäße flammgeschützte elastische Belagmaterial auf Linoleumbasis:
10 bis 90 Gew.- % Bindemittel auf Linoleum-Basis,
10 bis 90 Gew.-% organische Füllstoffe
1 bis 40 Gew.-% anorganische (mineralische) Füllstoffe und Pigmente
0,1 bis 10 Gew.-% Flammschutzmittel.

Besonders bevorzugt enthält das erfindungsgemäße flammgeschützte elastische Belagmaterial auf Linoleumbasis:
30 bis 70 Gew.- % Bindemittel auf Linoleum-Basis,
30 bis 70 Gew.-% organische Füllstoffe
5 bis 35 Gew.-% anorganische (mineralische) Füllstoffe und Pigmente
0,1 bis 10 Gew.-% Flammschutzmittel.

Außer dem Flammschutzmittel enthält das erfindungsgemäße flammgeschützte elastische Belagmaterial auf Linoleumbasis übliche Komponenten, wie Bindemittel (sog. Bedford-Zement oder B-Zement aus einem teiloxidierten Leinöl (Linoxyn) und mindestens einem Harz als Klebrigmacher), mindestens einen Füllstoff und ggf. mindestens ein Färbemittel.

Bevorzugt besteht das Bindemittel aus teiloxidierten Leinöl und 1 bis 30 Gew.-% Harz (bezogen auf Leinöl); das bevorzugte Harz ist Kolophonium.

Als organische Füllstoffe werden Weichholzmehl (für helle Sorten) und/oder Korkmehl (für dunkle Farbstellungen) bevorzugt (bei gleichzeitiger Anwesenheit von Holzmehl und Korkmehl typischerweise im Gewichtsverhältnis 90 : 10).

Als anorganische (mineralische) Füllstoffe werden bevorzugt Calciumcarbonat (Kreide), Kaolin (China Clay) und Schwerspat verwendet.

Die Linoleum-Mischmasse enthält üblicherweise ein Färbemittel, wie ein Pigment (z. B. Titandioxid), und/oder andere übliche Färbemittel auf Basis von anorganischen und organischen Farbstoffen.

Als Färbemittel können jegliche natürliche oder synthetische Farbstoffe sowie anorganische oder organische Pigmente, allein oder in beliebiger Kombination, verwendet werden.

Ferner können in der Linoleum-Mischmasse übliche Additive, wie Verarbeitungshilfsmittel, Antioxidantien, UV-Stabilisatoren, Gleitmittel und dergleichen enthalten sein, die in Abhängigkeit des Bindemittels ausgewählt werden.

Die Linoleum-Nutz- bzw. Oberschicht weist vorzugsweise eine Dicke von 0,9 bis 6,0 mm, besonders bevorzugt 1,4 bis 4 mm, auf. Unter Nutzschicht wird im Rahmen der vorliegenden Erfindung die aus einem homogenen Material aufgebaute, oberste Schicht des Bodenbelags verstanden.

Der erfindungsgemäße Bodenbelag auf Linoleum-Basis kann trägerlos (vgl. DE 199 10 389 A1) sein oder einen Träger umfassen. Als Trägermaterial kann ein Material auf Basis natürlicher oder synthetischer Fasern, Gewebe, Gewirke, Matten oder Textilwerkstoffe eingesetzt werden. Als Beispiele können Jutegewebe, Mischgewebe aus natürlichen Fasern, wie Baumwolle und Zellwolle, Glasfasergewebe, mit Haftmittel beschichtetes Glasfasergewebe, Carbonfasern, Polyacrylonitrilfasern, p-Aramid-Fasern (Narmco 5208 ®, Hexcel F-161®, Kevlar®) , Polyolefinfasern, PTFE-Fasern, Quarzfasern, Aluminiumoxidfasern, Siliciumcarbidfasern (Nicalon ®), Mischgewebe aus Synthesefaser, Gewebe aus Kern/Mantelfasern mit z.B. einem Kern aus Polyester und einer Ummantelung aus Polyamid, genannt werden. Als Haftvermittler für Glasfasergewebe kann beispielsweise eine Beschichtung der Glasfasern aus einem Styrol-Butadien-Latex verwendet werden.

Der erfindungsgemäße Bodenbelag kann mit oder ohne Träger ausgebildet sein, wobei die Linoleum-Nutzschicht sowohl einschichtig als auch mehrschichtig gestaltet sein kann. Dabei ergeben sich je nach Schichtfolge sowohl symmetrische als auch asymmetrische Flächengebilde, wobei bei trägerlosen Linoleum-Flächengebilden symmetrische Aufbauten bevorzugt sind. Beispielsweise kann der erfindungsgemäße Bodenbelag zwei Schichten aus Linoleum umfassen (materialhomogen), die gleich oder verschieden sein können.

Weiterhin kann unter der Linoleum-Nutzschicht eine Korkmentschicht mit oder ohne Träger angeordnet sein. Korkment ist eine Mischung, die B-Zement und gemahlenen Kork als Füllstoff enthält und bei Bodenbelägen als isolierende Unterschicht für eine bessere Wärmeisolierung, Trittelastizität und Gehkomfort sorgt und den Tritt- und Raumschall dämpft. Auch eine derartige Korkmentschicht kann weiter ein oder mehrere der Flammschutzmittel umfassen.

Daneben können auch unter oder zwischen zwei Linoleumschichten funktionale Schichten angeordnet sein, so dass sich drei- oder mehrschichtige Flächengebilde ergeben. Beispielsweise kann unter der Nutzschicht des erfindungsgemäßen Bodenbelags mindestens eine weitere Schicht, vorzugsweise eine Schaumschicht, eine Schicht zur Trittschalldämmung und/oder eine Isolationsschicht angeordnet sein. Die Schichtdicken der aufgebrachten Schichten können gleich oder verschieden sein. Alle diese unter oder zwischen zwei Linoleumschichten angeordneten funktionale Schichten können ebenfalls jeweils weiter ein oder mehrere der vorgenannten Flammschutzmittel enthalten.
Ferner kann auf der Rückseite des erfindungsgemäßen Bodenbelags ohne Träger mindestens eine Klebeschicht angeordnet sein.

Der erfindungsgemäße Bodenbelag auf Linoleum-Basis kann in Form von Bahnen oder Fliesen vorliegen.

Der erfindungsgemäße Bodenbelag auf Linoleum-Basis kann ferner durch übliche Verfahren zur Herstellung ein- oder mehrschichtiger Linoleum-Bodenbeläge mit oder ohne Träger hergestellt werden.

Verfahren zur Herstellung eines flammgeschützten elastischen Belagmaterials auf Linoleum-Basis.

Teiloxidiertes Leinöl wird bei 130 bis 150°C mit 20 Gew.-% Kolophonium zu Linoleumzement geschmolzen. Linoleumzement wird mit organischem, anorganischem Füllstoff, Pigmenten und Flammschutzmitteln gemischt. Dies geschieht nacheinander in Dreiwalzen und in Mischern des Typs Werner & Pfleiderer oder Branbury-Mischern unter Wirkung hoher Scherkräfte. Danach wird die Mischung mit einer Stachelwalze (Kratzer) gekörnt und mit einem Kalander bei 10 bis 150°C auf ein Trägermaterial gepresst. Die Trocknung der Linoleumbahn geschieht bei 60 bis 80°C über 2 bis 3 Wochen. Danach wird die Bahn zugeschnitten.

Flammgeschütztes elastisches Belagmaterial auf Kork-Basis Die vorliegende Erfindung betrifft ferner ein flammgeschütztes elastisches Belagmaterial auf Kork-Basis, welches das Flammschutzmittel enthält.

Bevorzugt ist die Verwendung des erfindungsgemäßen flammgeschützten elastischen Belagmaterials auf Kork-Basis als Nutzschicht eines Bodenbelags auf Kork-Basis.

Besonders bevorzugt enthält das erfindungsgemäße flammgeschützte elastische Belagmaterial auf Kork-Basis:
10 bis 90 Gew.- % organisches Bindemittel
10 bis 90 Gew.-% organische Füllstoffe
0,1 bis 10 Gew.-% Flammschutzmittel.

Als organisches Bindemittel ist Melamin-Formaldehyd-Harz bevorzugt.

Als organischer Füllstoff ist Korkgranulat mit einer Korngröße von 0,1 bis 10 mm bevorzugt.

### Verfahren zur Herstellung eines flammgeschützten elastischen Belagmaterials auf Kork-Basis

Das Verfahren ist dadurch gekennzeichnet, dass Bindemittel und Korkgranulat mit einem Vernetzungskatalysator vermischt, bei erhöhter Temperatur und erhöhtem Druck verdichtet und die erhaltenen Blöcke in Platten geschnitten werden. Deren Oberfläche wird geschliffen und gegebenenfalls mit einer Oberflächenschicht geschützt. Danach werden die Platten zugeschnitten.

### Flammgeschütztes elastisches Belagmaterial auf Basis thermoplastischer Kunststoffe

Erfindungsgemäßes elastisches Belagmaterial auf Basis thermoplastischer Kunststoffe kann Polyvinylchlorid, Acrylonitril-Butadien-Styrol, Polypropylen, Polyethylen und thermoplastisches Polyurethan enthalten. Andere thermoplastische Harze können plastifiziert werden und schließen Polyvinylacetat, Celluloseacetat, Polystyrol, Ethylcellulose, Polyvinylidenchlorid, Polyurethan, Nylon, Acryl und Polyphenylenoxid ein.

Bevorzugt ist die Verwendung des flammgeschützten elastischen Belagmaterials auf Basis thermoplastischer Kunststoffe als Nutzschicht in einem Fußbodenbelag.

Flammgeschütztes elastisches Belagmaterial auf Basis von plastifiziertem PVC Bevorzugt enthält das flammgeschützte elastische Belagmaterial auf Basis von plastifiziertem PVC:
10 bis 90 Gew.- % Polyvinylchlorid
10 bis 90 Gew.- % Plastifizierungsmittel
10 bis 90 Gew.-% anorganische (mineralische) Füllstoffe
0,1 bis 10 Gew.-% erfindungsgemäßes Flammschutzmittel.

Bevorzugte Plastifizierungsmittel schließen ein: Butylcyclohexylphthalat, Tri(butoxyethyl)phosphat, Trioctylphosphat, 2-Ethylhexyldiphenylphosphate, Dibutylphthalat, Diisobutyladipat, epoxidiertes Di(2-ethylhexyl) tetrahydrophthalat, Di(2-ethylhexyl)phthalat, Diisooctylphthalat, Dioctyladipat, Diisononylphthalat, Di(2-ethylhexyl)hexahydrophthalat, n-Octylphthalat, n-Decylphthalat, Tricresylphosphat, Butylbenzylphthalat, Dicaprylphthalat, Di(3,5,5-trimethylhexyl)phthalat, Diisodecylphthalat, Di(2-ethylhexyl)adipat, Butylepoxystearat, epoxidiertes Sojaöl, epoxidiertes Octyltallat, Dimethylphthalat, Hexylepoxystearat, Cresyldiphenylphosphat, Di(2-ethylhexyl)isophthalat, n-Octyladipat,n-Decyladipat, Di(2-ethylhexyl)azelat, epoxidiertes Octyloleat, Di(2-ethylhexyl)sebacat, Tetraethylenglycol-di(2-ethylhexoat), Diisodecyladipate und Triethylenglycol-di(2-ethylhexoat).

Erfindungsgemäße anorganische (mineralische) Füllstoffe sind Calciumcarbonate (natürlicher, oberflächenbehandelter oder gefällter Kalkstein), hydratisiertes Magnesiumsilicat, Bariumsulfat, Aluminiumsilicat, Magnesiumhydroxid, Diatomeenerde, hydratisiertes Calciumsilicat, Siliciumdioxid und Calciumsulfate.

Bevorzugte Stabilisatoren sind Fettsäuremetallsalze von Barium Cadmium, Calcium, Zink.

Bevorzugte Gleitmittel sind Wachse, Fettsäureester, Calciumstearat.

Bevorzugt ist die Verwendung des flammgeschützten elastischen Belagmaterials auf Basis von plastifiziertem PVC als Nutzschicht in einem Fußbodenbelag. Dieser zeichnet sich durch hohe Verschleißfestigkeit, gute Elastizität und leichte Reinigung aus.

Verfahren zur Herstellung eines flammgeschützten elastischen Belagmaterials auf Basis von plastifiziertem PVC

Die Inhaltsstoffe werden gemischt, zu Bahnen gewalzt und zerkleinert. Das erhaltene Granulat mit bevorzugter Teilchengröße von 0,1 bis 10mm wird bei 100 bis 300°C geschmolzen und in einer Walze auf eine Unterstützungsschicht aufgewalzt und zugeschnitten.

### Flammgeschütztes elastisches Belagmaterial auf Kautschuk-Gummi-Basis

Besonders bevorzugt enthält ein flammgeschütztes elastisches Belagmaterial auf Kautschuk-Gummi-Basis:
10 bis 90 Gew.- % Kautschuk (z.B. Styrol-Butadien-Kautschuk)
10 bis 90 Gew.-% anorganische (mineralische) Füllstoffe
0,1 bis 10 Gew.-% Flammschutzmittel.

Bevorzugt ist die Verwendung des erfindungsgemäßen flammgeschützten elastischen Belagmaterials auf Kautschuk-Gummi-Basis als Fußbodenbelag. Derartige elastische Gummibeläge zeichnen sich durch hohe Widerstandskraft gegen mechanische und chemische (Säuren, Öle, Fette, Zigarettenglut) Einwirkung aus.

Für das erfindungsgemäße Belagmaterial geeignete Kautschuke umfassen neben Naturkautschuk auch Synthesekautschuke auf Basis: Polybutadien, Butadien-Acrylsäure-C₁-C₄-alkylester-Copolymerisate, Polychloropren, Polyisopren, Styrol-Butadien-Copolymerisate, Butadien-Acrylnitril-Copolymerisate.

Für das erfindungsgemäße Belagmaterial können den Kautschukrohmischungen übliche Füllstoffe und Hilfsmittel, wie beispielsweise Weichmacher, Harze, Faktisse und Stabilisatoren zur Erzielung bestimmter Rohmischungs- oder Vulkanisationseigenschaften zugesetzt werden.

Verfahren zur Herstellung eines Belagmaterials auf Kautschuk-Gummi-Basis Erfindungsgemäß werden Kautschuk, Füllstoffe, Flammschutzmittel bei 100 bis 300°C gemischt. Die Vulkanisierung erfolgt bei 100 bis 300°C, bevorzugt 100 bis 200 °C, besonders bevorzugt 130 bis 180°C. Die Vulkanisierung findet bevorzugt unter einem Druck von 10 bis 200 bar statt. Bevorzugt wird der Druck durch Walzen erzeugt.
Bevorzugte Mischaggregate sind die in der Kautschukindustrie üblichen Kneter, Walzen, Innenmischer und Mischextruder, die in der Regel mit Scherraten von 1 bis 1000 sec., vorzugsweise 1 bis 200 sec. arbeiten.

Die für das erfindungsgemäße Verfahren notwendige Massetemperatur des Mischgutes von vorzugsweise 140 bis 250°C, insbesondere von 150 bis 200°C, kann durch Wärmezuführung von außen oder durch entsprechende Friktion beim Mischen erzielt werden.

Zur Vulkanisation können die aus der Kautschuktechnik bekannten Vernetzungssysteme wie Disulfide, Schwefel, Peroxide, Polyisocyanate, Metalloxide, Phenolharze und deren Kombinationen eingesetzt werden. Schwefelvernetzungssysteme werden besonders bevorzugt.

Die Vernetzungssysteme werden vorzugsweise bei Temperaturen unter 130°C, vorzugsweise unter 100°C, zugemischt.

### Flammgeschütztes elastisches Belagmaterial für Rücken von textilen Bodenbelägen

Textile Bodenbeläge setzen sich in der Nutzschicht aus Fasern aus Polyamid, Polyacryl, Polypropylen, Wolle, Zellwolle zusammen. Der Rücken dient der Verbesserung der Flächenstabilität, der Dämmwirkung und der Verbesserung der Verarbeitung und des Liegeverhaltens. Er setzt sich aus geschäumten und ungeschäumten Kunststoffmassen oder aus textilen Flächengebilden zusammen, die aus Butadien-Styrol-Dispersionen, PVC-Plastisole, Polyurethan-Mischungen, Naturlatex, Bitumen, Polyethylen, Polypropylen, Polyisobutylen, Copolymeren und Mischungen davon, bestehen.

Die Rückenschicht kann aus reinem oder gemischtem Polymer bestehen und auch Füllstoffe enthalten. Anorganische (mineralische) Füllstoffe können in faserförmiger, flockenförmiger, kristalliner, amorpher, hohler, pulverförmiger oder partikulärer Form eingesetzt werden. Beispiele von Füllstoffen schließen ein: Calciumcarbonat, Calciumsulfat, Magnesiumoxid, Magnesiumhydroxid, Perlit, synthetische Glimmer, Vermiculite, Tonmineralien, thermisch stabile Kohlenstofffasern, Zinkoxid, Dawsonite, Calciumcarbonat-Hohlkugeln geringer Schüttdichte, Glasshohlkugeln, thermisch stabile Kohlenstoff-Hohlkugeln, Aluminiumhydroxyd, recyclierte Flugasche.

Besonders bevorzugt enthält ein flammgeschütztes elastisches Belagmaterial für Rücken von textilen Bodenbelägen:
10 bis 90 Gew.- % Kunststoffmasse
10 bis 90 Gew.-% anorganische (mineralische) Füllstoffe
0,1 bis 10 Gew.-% Flammschutzmittel.

### Verfahren zur Herstellung eines flammgeschützten elastischen Belagmateriales für Rücken von textilen Bodenbelägen

Latex, Füllstoffe und Flammschutzmittel werden gemischt. Die Latexmischung wird auf de Teppichrücken aufgegossen und gegebenenfalls eine weitere Deckschicht aufgebracht. Der Teppich wird bei 50 bis 200°C getrocknet und zugeschnitten.

### Experimentelles

Es wurden folgende erfindungsgemäße phosphororganische Flammschutzmittel eingesetzt: Exolit OP 1230 ® (Fa Clariant GmbH) enthält 200ppm Elektrolyt (gerechnet als Sulfat).Die Teilchengröße d₉₀ betrug 100µm. Exolit OP 930 ® (Fa Clariant GmbH) enthält 250ppm Elektrolyt (gerechnet als Sulfat). Die Teilchengröße d₉₀ betrug 5µm. Exolit OP 1311 ® (Fa Clariant GmbH) enthält 600ppm Elektrolyt (gerechnet als Sulfat).

Der eingesetzte Blähgraphit Nordmin 250 ® enthält 8% Elektrolyt (gerechnet als H₂SO₄).

Von Flammschutzmittel wird der Weißgrad nach Hunter bestimmt (siehe Tabelle 1). Er ist wesentlich höher als der von Blähgraphit (Stand der Technik). Ein negativer Hunter-a-Wert zeigt eine Grüntönung an, ein positiver Hunter-a-Wert eine Rottönung. Ein negativer Hunter-b-Wert zeigt eine Blautönung an, ein positiver eine Gelbtönung.

Die Testmethode nach EN ISO 9239-1 und EN ISO 11925-2 lehnt sich an die alte Prüfung DIN 4102 T14 an, die Klassifizierung erfolgt aber nach EN 13501-1. Bodenbeläge mit einem Testergebnis von einer kritischen Strahlungsintensität von > 4,5 kW/m² werden in C_{FL} eingestuft. Bei einer kritischen Strahlungsintensität von > 8 kW/m² erfolgt die Einstufung in die Baustoffklasse B_{FL}.

### Beispiele 1 bis 7 (Linoleum)

Dazu werden nach PCT/WO 02/081812 zunächst alle in der nachstehenden Tabelle 2 aufgelisteten Komponenten für die Linoleum-Masse in einem Kneter zu einer möglichst homogenen Grundmasse (Mischmasse) vermischt. Die so erhaltene Mischmasse wird durch ein Walzwerk zu Fellen verarbeitet und einem Kratzer zugeführt, wonach die erhaltenen Mischmassepartikel einem Kalander zugeführt werden und unter Druck und einer Temperatur von üblicherweise 80 bis 110°C auf Jute als Trägermaterial gepresst werden. Die Bandgeschwindigkeit beträgt 10 m/min.

Die erfindungsgemäßen flammgeschützten Beläge von Beispiel 1 bis 4 erzielen die Brandschutzklassifizierung B_{FI}. Die in den Vergleichsversuchen 5 bis 7 hergestellten Beläge erreichen nur die Brandschutzklassifizierung C_{FI}.

### Beispiel 8 (Kork-Bodenbelag)

Zur Herstellung eines erfindungsgemäßen Kork-Bodenbelags wird üblicherweise Korkgranulat einer bestimmten Korngrößenverteilung und Restfeuchte (vorzugsweise 1,5-3,0 %) mit Melamin-Formaldehyd-Harz als Bindemittel sowie das Flammschutzmittel und einem herkömmlichen Vernetzungskatalysator gemischt. Die eingesetzten Mengen sind Tabelle 2 zu entnehmen. Dieses Gemisch wird in dickwandige Stahlformen (beispielhafte Masse : Breite 700 mm, Länge 1000 mm, Höhe 800 mm) gefüllt und verdichtet (vorzugsweise 10-200 t).

Die Vernetzung erfolgt beispielsweise bei 110-135°C innerhalb von 8 bis 22 Stunden. Die derart aus Korkgranulat gefertigten Blöcke (mit zum Beispiel einer Resthöhe von 100-300 mm je nach Verdichtungsgrad/Druck) werden dann in einzelne Platten mittels einer Bandschneideanlage geschnitten/geschält. Die Plattenstärke kann beispielsweise zwischen 1 und 10 mm betragen. Um eine glatte und konturenscharfe Oberfläche zu erzielen, werden die Platten üblicherweise mittels einer Bandschleifmaschine geschliffen und kalibriert. Die Oberseite wird dabei vorzugsweise mit 3 bis 6 Schleifvorgängen, zunächst mit groben Schleifkorn und zuletzt mit feinem Schleifkorn, geschliffen (beispielsweise 1. = 40er Korn, 2. = 80er Korn, 3. =120er Korn, 4. =180er Korn, 5. = 220er Korn, 6. = 360er Korn). Die Unterseite wird lediglich mit 1-2 Schleifgängen geschliffen, zum Beispiel mit 24er und 40er Korn. Die Platten können anschließend mit einem Oberflächenschutz ausgestattet werden. Dies kann beispielsweise mit einer PVC Klarfolie (K-Wert 60 oder 80), einem Lack (Fa. PPG oder Lott) oder Wachs (zum Beispiel Wachstype : Solid-Floer-Wax, Fa. Loba, Ditzingen Deutschland) erfolgen.

Aus den beschichteten Platten können anschließend fliesenförmige Platten gestanzt und gegebenenfalls die Kanten mittels Schneidmesser gesäubert werden.

Der erfindungsgemäße flammgeschützte Belag erzielt die Brandschutzklassifizierung B_{FI}.

### Beispiele 9-10 (PVC)

Die Inhaltsstoffe werden in den in Tabelle 2 beschriebenen Mengen gemischt und dann auf einem 2-Rollen-Kalander zu Bahnen mit der gewünschten Dicke gewalzt und diese zerkleinert Das Granulat wird bei 200°C geschmolzen und mit einer 2-Rollen-Walze auf eine Unterstützungsschicht aufgewalzt und zugeschnitten.

Die erfindungsgemäßen flammgeschützten Beläge von Beispiel 9 bis 10 erzielen die Brandschutzklassifizierung B_{FI}.

### Beispiel 11 (Gummi)

In einem Messkneter der Fa. Haake Mess-Technik GmbH & Co, Karlsruhe 41 werden die in Tabelle 3 genannten Komponenten bei 170°C Batchtemperatur und bei Umdrehungsgeschwindigkeiten der CAM-Schaufeln von 30 bis 100 U/Min 6min gemischt. Das Disulfid-Vulkanisiersystem wurde anschließend auf einer Laborwalze bei 40 bis 60°C nachträglich zugemischt. Die Vulkanisation erfolgte 20 Minuten bei 150°C.

Der erfindungsgemäße flammgeschützte Belag erzielt die Brandschutzklassifizierung B_{FI}.
%-Angaben sind üblicherweise Gew.-%.

### Beispiele 12 bis 13 (Latex)

Das Polyurethan-Latex wird unter Rühren vorgelegt und der Calciumcarbonatfüllstoff eben so schnell zugegeben wie er in der Flüssigkeit dispergiert. Paragum®241 Verdicker (Fa Para-Chem Southern, Inc.) wird zugegeben, bis eine Viskosität von 9300 cPs erreicht ist. Der Teppich zu Testzwecken ist Nylon Schlingenware mit 750 g/qm Gewicht. Die Latexmischung wird auf den Teppichrücken aufgegossen bis zu einem Schichtgewicht von 1,18 kg/qm gefolgt von einer Polypropylen-Deckschicht von 110g/qm als zweite Rückenschicht. Der Teppich wird bei 132°C 12 min getrocknet.

Der erfindungsgemäße flammgeschützte Belag erzielt die Brandschutzklassifizierung B_{FI}.

**Tabelle 1:**

| Weißwerte von ausgesuchten Flammschutzmitteln | | | |
|---|---|---|---|
| | L-Wert | a-Wert | b-Wert |
| | (nach Hunter) | | |
| erfindungsgemäßes Flammschutzmittel | 92 | 0,36 | 0,59 |
| Blähgraphit Nordmin 250 (R) | 42,43 | 0,58 | -0,02 |

**Tabelle 2:**

| Beispiele | 1 | 2 | 3 | 4 | 5 | 6 | 7 | 8 | 9 | 10 |
|---|---|---|---|---|---|---|---|---|---|---|
| | % | % | % | % | % | % | % | % | % | % |
| Zement | 40 | 40 | 40 | 40 | 40 | 40 | 40 | | | |
| Korkmehl | 3 | 3 | 3 | 3 | 3 | 3 | 3 | | | |
| Holzmehl | 27 | 27 | 27 | 27 | 27 | 27 | 27 | | | |
| Kreide | 26,7 | 17 | 20 | 20 | 27 | 27 | 27 | | 25 | 5 |
| Titandioxid | 3 | 3 | 3 | 3 | 3 | 3 | 3 | | 2 | |
| Melamin | | | | | | | | 36 | | |
| Formaldehyd | | | | | | | | 49 | | |
| Ammoniumchlorid | | | | | | | | 2 | | |
| Netzmittel auf Ethoxylatbasis | | | | | | | | 2 | | |
| PVC | | | | | | | | | 39 | 57 |
| Di(2-ethylhexyl)phthalat | | | | | | | | | 9 | 11 |
| Diisononylphthalat | | | | | | | | | 12 | 12 |
| Dioctyladipat | | | | | | | | | | 2 |
| Stabilisator | | | | | | | | | 1,6 | 1 |
| Gleitmittel | | | | | | | | | 0,4 | 2 |
| Exolit OP 1230 (R) | 0,3 | 10 | | | | | | 10 | 10 | 10 |
| Exolit OP 1311 (R) | | | 10 | | | | | | | |
| Exolit OP 930 (R) | | | | 10 | | | | | | |
| NordMin 250 (R) | | | | | 5 | | | | | |
| NordMin KP 251 | | | | | 5 | | | | | |
| ATH M20B (R) | | | | | | 10 | | | | |
| Budit 3076 DC (R) | | | | | | | 10 | | | |
| Brandschutzklassifizierung nach DIN 4102 T14, EN 13501-1 | B_{FI} | B_{FI} | B_{FI} | B_{FI} | C_{FI} | C_{FI} | C_{FI} | B_{FI} | B_{FI} | B_{FI} |

**Tabelle 3**

| Beispiele | 11 |
|---|---|
| | % |
| Styrol-Butadien-Kautschuk mit 23% Styrolgehalt | 31 |
| Styrol-Butadien-Copolymer mit 85% Styrolgehalt | 6 |
| Gefällte Kieselsäure | 12 |
| Kaolin | 22 |
| Gefällte Kreide | 9 |
| Cumaron-Inden-Harz | 5 |
| Zinkoxid | 2 |
| Stearinsäure | 0,5 |
| Schwefel | 1 |
| Polyethylenglykol | 1 |
| Cyclohexylbenzthiazylsulfenamid | 1 |
| Tetramethylthiuramindisulfid | 0,2 |
| Exolit OP 930 (R) | 10 |
| Brandschutzklassifizierung nach DIN 4102 T14, EN 13501-1 | B_{FI} |

**Tabelle 4**

| Beispiele | 12 | 13 |
|---|---|---|
| | % | % |
| Polyurethan Latex (56%) | 30 | - |
| Styrol-Butadien Latex (53,3%) | - | 30 |
| Calciumcarbonat | 60 | 60 |
| Exolit OP 1230 (R) | 10 | 10 |
| Brandschutzklassifizierung nach DIN 4102 T14, EN 13501-1 | | B_{FI} |

## Patentansprüche

1. Elastisches Belagmaterial, **dadurch gekennzeichnet, dass** es als Flammschutzmittel ein Phosphinsäuresalz der Formel (I) und/oder ein Diphosphinsäuresalz der Formel (II) und/oder deren Polymere 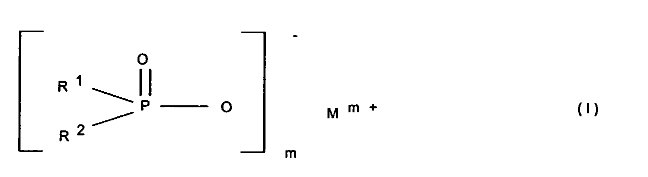 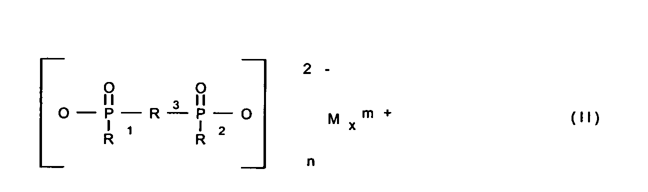 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten, enthält.

2. Elastisches Belagmaterial nach Anspruch 1, **dadurch gekennzeichnet, dass** M Calcium, Aluminium oder Zink bedeutet.

3. Elastisches Belagmaterial nach Anspruch 1 oder 2, **dadurch gekennzeichnet, dass** R¹, R² gleich oder verschieden sind und C₁-C₆-Alkyl, linear oder verzweigt und/oder Phenyl bedeuten.

4. Elastisches Belagmaterial nach einem oder mehreren der Ansprüche 1 bis 3, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

5. Elastisches Belagmaterial nach einem oder mehreren der Ansprüche 1 bis 4, **dadurch gekennzeichnet, dass** R³ Methylen, Ethylen, n-Propylen, iso-Propylen, n-Butylen, tert.-Butylen, n-Pentylen, n-Octylen oder n-Dodecylen bedeutet.

6. Elastisches Belagmaterial nach einem oder mehreren der Ansprüche 1 bis 4, **dadurch gekennzeichnet, dass** R³ Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

7. Elastisches Belagmaterial nach einem oder mehreren der Ansprüche 1 bis 6, **dadurch gekennzeichnet, dass** weiterhin Melaminphosphat, Dimelaminphosphat, Melaminpyrophosphat, Melaminpolyphosphate, Melampolyphosphate, Melempolyphosphate, Melonpolyphosphate und/oder Melaminkondensationsprodukte wie Melam, Melem und/oder Melon und/oder Carbodiimide enthalten sind.

8. Elastisches Belagmaterial nach einem oder mehreren der Ansprüche 1 bis 7, **dadurch gekennzeichnet, dass** weiterhin oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin enthalten sind.

9. Elastisches Belagmaterial nach einem oder mehreren der Ansprüche 1 bis 8, **dadurch gekennzeichnet, dass** weiterhin stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, enthalten sind.

10. Elastisches Belagmaterial nach einem oder mehreren der Ansprüche 1 bis 9, **dadurch gekennzeichnet, dass** weiterhin Salze und Ester der Orthokieselsäure und deren Kondensationsprodukte, Silikate, Zeolithe und Kieselsäuren, Glas-, Glas-Keramik oder Keramik-Pulver; Magnesiumhydroxid, Hydrotalcite, Magnesium-Carbonate oder Magnesium-Calcium-Carbonate; Zinkoxid, -stannat, -hydroxystannat, -phosphat, -borat oder -sulfide; Aluminiumhydroxid oder -phosphat enthalten sind.

11. Elastisches Belagmaterial nach einem oder mehreren der Ansprüche 1 bis 10, **dadurch gekennzeichnet, dass** es weiterhin Stickstoffverbindungen der Formeln (III) bis (VIII) oder Gemische davon 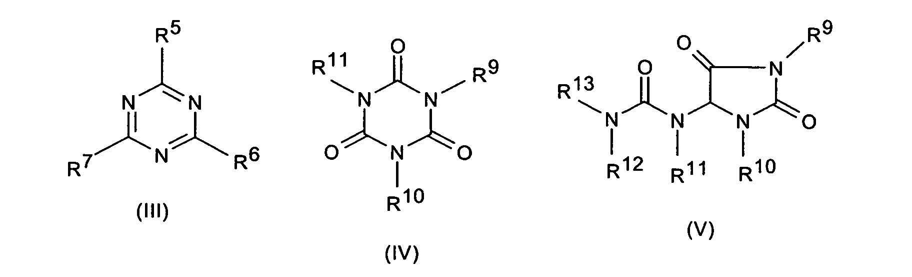 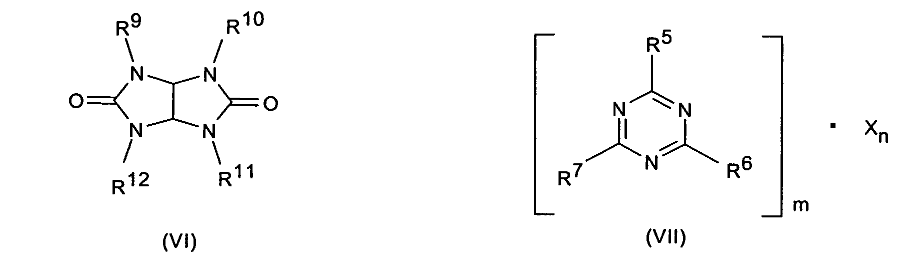 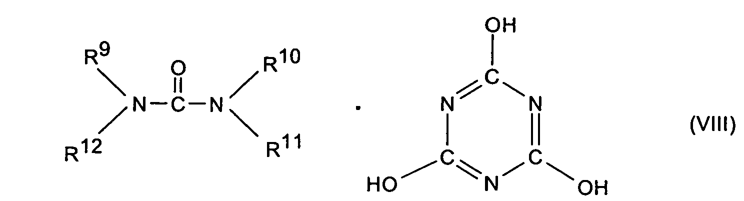 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸, m und n unabhängig voneinander 1, 2, 3 oder 4, X Säuren, die Addukte mit Triazinverbindungen (III) bilden können, bedeuten, enthält

12. Elastisches Belagmaterial nach einem oder mehreren der Ansprüche 1 bis 11, **dadurch gekennzeichnet, dass** es das Flammschutzmittel in Mengen von 0,01 bis 40 Gew.-%, bezogen auf das Gesamtgewicht des elastischen Belagmaterials, enthält.

13. Elastisches Belagmaterial nach einem oder mehreren der Ansprüche 1 bis 12, **dadurch gekennzeichnet, dass** es das Flammschutzmittel in Mengen von 0,1 bis 20 Gew.-%, bezogen auf das Gesamtgewicht des elastischen Belagmaterials, enthält.

14. Elastisches Belagmaterial nach einem oder mehreren der Ansprüche 1 bis 13, **dadurch gekennzeichnet, dass** es das Flammschutzmittel in Mengen von 0,3 bis 10 Gew.-%, bezogen auf das Gesamtgewicht des elastischen Belagmaterials, enthält.

15. Elastisches Belagmaterial nach einem oder mehreren der Ansprüche 1 bis 14, **dadurch gekennzeichnet, dass** es sich bei dem Belagmaterial um Linoleum, thermoplastische Kunststoffe, Polyvinylchlorid, Kautschuk-Gummi-Kombinationen, Kork, Polymere auf Polyurethan und/oder Styrol-Butadien-Latex-Basis handelt.

16. Elastisches Belagmaterial nach einem oder mehreren der Ansprüche 1 bis 15, **dadurch gekennzeichnet, dass** es sich bei dem Belagmaterial um Linoleum handelt, wobei das Belagmaterial 10 bis 90 Gew.-% Bindemittel auf Linoleum-Basis, 10 bis 90 Gew.-% organische Füllstoffe, 5 bis 40 Gew.-% anorganische (mineralische) Füllstoffe und Pigmente und 0,1 bis 10 Gew.-% Flammschutzmittel enthält.

17. Elastisches Belagmaterial nach einem oder mehreren der Ansprüche 1 bis 15, **dadurch gekennzeichnet, dass** es sich bei dem Belagmaterial um Linoleum handelt, wobei das Belagmaterial 30 bis 70 Gew.-% Bindemittel auf Linoleum-Basis, 30 bis 70 Gew.-% organische Füllstoffe, 5 bis 35 Gew.-% anorganische (mineralische) Füllstoffe und Pigmente und 0,1 bis 10 Gew.-% Flammschutzmittel enthält.

18. Elastisches Belagmaterial nach einem oder mehreren der Ansprüche 1 bis 15, **dadurch gekennzeichnet, dass** es sich bei dem thermoplastischen Kunststoff um Polyvinylchlorid, Acrylonitril-Butadien-Styrol, Polypropylen, Polyethylen, thermoplastisches Polyurethan, Polyvinylacetat, Celluloseacetat, Polystyrol, Ethylcellulose, Polyvinylidenchlorid, Polyurethan, Nylon, Acryl, Polyacrylat und/oder Polyphenylenoxid handelt.

19. Elastisches Belagmaterial nach Anspruche 18, **dadurch gekennzeichnet, dass** es sich bei dem thermoplastischen Kunststoff des Belagmaterials um Polyvinylchlorid handelt, wobei das Belagmaterial 10 bis 90 Gew.-% Polyvinylchlorid, 10 bis 90 Gew.- % Plastifizierungsmittel, 10 bis 90 Gew.-% anorganische (mineralische) Füllstoffe und 0,1 bis 10 Gew.-% Flammschutzmittel enthält.

20. Elastisches Belagmaterial nach einem oder mehreren der Ansprüche 1 bis 15, **dadurch gekennzeichnet, dass** es sich bei dem Belagmaterial um Kautschuk-Gummi-Kombinationen handelt, wobei das Belagmaterial 10 bis 90 Gew.-% Kautschuk, 10 bis 90 Gew.-% anorganische Füllstoffe und 0,1 bis 10 Gew.-% Flammschutzmittel enthält.

21. Elastisches Belagmaterial nach einem oder mehreren der Ansprüche 1 bis 15, **dadurch gekennzeichnet, dass** es sich bei dem Belagmaterial um Kork handelt, wobei das Belagmaterial 10 bis 90 Gew.-% organisches Bindemittel, 10 bis 90 Gew.-% organische Füllstoffe (Korkgranulat) und 0,1 bis 10 Gew.-% Flammschutzmittel enthält.

22. Elastisches Belagmaterial nach Anspruch 21, **dadurch gekennzeichnet, dass** das organisches Bindemittel Melamin-Formaldehyd-Harz ist.

23. Elastisches Belagmaterial nach einem oder mehreren der Ansprüche 1 bis 15, **dadurch gekennzeichnet, dass** es für Rücken von textilen Bodenbelägen eingesetzt werden kann und
10 bis 90 Gew.-% Kunststoffmasse
10 bis 90 Gew.-% anorganische (mineralische) Füllstoffe
0,1 bis 10 Gew.-% Flammschutzmittel enthält.

24. Verfahren zur Herstellung eines elastischen Belagmaterials mit Linoleum, **dadurch gekennzeichnet, dass** teiloxidiertes Leinöl während 0,01 bis 100 h bei 30 bis 300°C mit Kolophonium zu Linoleumzement geschmolzen wird und dann das Linoleumzement mit organischem und/oder anorganischem Füllstoff, Pigmenten und Flammschutzmittel gemischt, anschließend mit einer Stachelwalze (Kratzer) gekörnt und mit einem Kalander bei 10 bis 150°C auf ein Trägermaterial gepresst und danach bei 30 bis 300°C über 1 bis 1000 h getrocknet wird.

25. Verfahren zur Herstellung eines elastischen Belagmaterials nach Anspruch 19, **dadurch gekennzeichnet, dass** Polyvinylchlorid, Plastifizierungsmittel, anorganische (mineralische) Füllstoffe und Flammschutzmittel und ggf. weitere Zusätze gemischt, zu Bahnen gewalzt und zu einem Granulat mit Teilchengrößen von 0,1 bis 10 mm zerkleinert werden, das bei 100 bis 300°C geschmolzen und in einer Walze auf eine Unterstützungsschicht aufgewalzt und zugeschnitten wird.

26. Verfahren zur Herstellung eines elastischen Belagmaterials nach Anspruch 20, **dadurch gekennzeichnet, dass** Kautschuk, Füllstoffe, Flammschutzmittel und ggf. weitere Zusätze bei 100 bis 300°C während 0,01 bis 100 h gemischt und anschließend vulkanisiert werden.

27. Verfahren zur Herstellung eines elastischen Belagmaterials nach Anspruch 21, **dadurch gekennzeichnet, dass** organisches Bindemittel und organische Füllstoffe (Korkgranulat) mit einer Korngröße von 0,1 bis 10 mm mit einem Vernetzungskatalysator vermischt und dann mit dem Flammschutzmittel bei erhöhter Temperatur von 30 bis 300°C innerhalb von 0,01 bis 100 Stunden und erhöhtem Druck (1-200 t) verdichtet und die erhaltenen Blöcke in Platten geschnitten werden.

28. Verfahren zur Herstellung eines elastischen Belagmaterials nach Anspruch 23 **dadurch gekennzeichnet, dass** Kunststoffmasse (Latex), anorganische (mineralische) Füllstoffe und das Flammschutzmittel bei Temperaturen von 20 bis 300°C gemischt werden und die entstandene Latexmischung auf einen Teppichrücken aufgegossen und gegebenenfalls eine weitere Deckschicht aufgebracht wird.
